# EUROPEAN PATENT APPLICATION

(11) **EP 4 542 827 A1**
(43) Date of publication of application: **23.04.2025**
(21) Application number: 23204995.7
(22) Date of filing: 20.10.2023
(51) Int. Cl.: H02K 3/50, H02K 3/52, H02K 3/24

(54) **A SUPPORT ARRANGEMENT FOR A ROTOR AND A ROTOR COMPRISING SUCH**

(71) Applicant: Polestar Performance AB, 405 31 Göteborg (SE)
(72) Inventor: EHN, Joakim, 461 98 Trollhättan (SE); PERSSON, Tony, 416 52 Göteborg (SE); BERGSTRÖM, Victor, 416 74 Göteborg (SE); HÅKANSSON, Emil, 416 74 Göteborg (SE)
(74) Representative: Zacco Sweden AB

(57) **Abstract**

The present disclosure relates to a support arrangement (1) comprising an annular star disc (10) having a plurality of evenly distributed radially extending arms (11), each arm (11) being arranged to extend along a pole base (103a) of a corresponding pole (103) of said rotor. Each arm (11) comprises, at a distal portion (13) thereof, an axially extending fork structure (15) arranged to support a winding arrangement (104) of said rotor. Further, the support arrangement (1) comprises an end plate (20) arranged to, at an installed state, be connected to said star disc (10) for enclosing said base portion (102a).

## Description

### TECHNICAL FIELD

The present disclosure relates to a support arrangement. Further, the disclosure relates to an electric motor and a rotor comprising such a support arrangement.

### BACKGROUND

In an electric vehicle the rotor and stator are key components of the electric motor that drives the vehicle's wheels. The rotor is the rotating part of the motor, typically made of a series of electromagnets, which are energized by electrical current. As the rotor spins, it generates a magnetic field that interacts with the stator. The stator is the stationary part of the motor, typically consisting of windings wound around a core. The rotor and stator work together to convert electrical energy stored in the EV's battery into mechanical energy to drive the vehicle, making them critical components of the EV powertrain.

Permanent magnets used in rotors are not considered environmentally friendly for several reasons. First, the production of permanent magnets involves mining and refining of rare earth elements, which can cause environmental degradation and pollution. Also, permanent magnets can pose challenges in recycling and disposal, as they contain hazardous materials that can potentially harm the environment if not handled properly. Therefore, while permanent magnets have many technological benefits, their production and use can have negative environmental implications that need to be carefully managed.

Based on the above, electrically excited rotors using windings around the rotor core are considered to be more environmental friendly compared to permanent magnet rotors.

However, as the rotor core comprises windings which will be affected by centrifugal forces, there is a need of securing the windings to the rotor core in order to prevent the windings from being dislocated. Conventionally, means for securing rotor windings utilize an excessive amount of material which increases the weight of the rotor core and/or fail to sufficiently secure the rotor windings.

Therefore, there is room for a support arrangement for a rotor that is improved in performance and/or utilizes less material compared to conventional solutions.

### SUMMARY

It is therefore an object of the present disclosure to alleviate at least some of the mentioned drawbacks to provide a support arrangement that utilizes less material and/or improves the securing of the windings to the rotor core. The present disclosure is at least partly based on the insight that by providing a support arrangement having a fork structure arranged to support a winding arrangement (specifically a winding overhang) of said rotor, the windings will be secured in an improved manner and/or with reduced material utilization.

The present disclosure relates to a support arrangement for a rotor comprising an annular star disc arranged to be attached to a base portion of an annular rotor core of said rotor. The star disc having a plurality of evenly distributed radially extending arms, each arm being arranged to extend along a pole base of a corresponding pole of said rotor, wherein each arm comprises, at a distal portion thereof, an axially extending fork structure arranged to support a winding arrangement of said rotor, the fork structure comprising a plurality of tines. The arms may extend from a circumference of said annular star disc. The annular star disc (and the rotor core) may be arranged to accommodate a rotor shaft.

The support structure further comprises an end plate arranged to, at an installed state, be connected to said star disc for enclosing said base portion and said star disc. Further, the plurality of arms and said end plate are arranged to, in said installed state, jointly enclose a plurality of winding overhang portions of said winding arrangement wound (axially) around each pole of said rotor and/or jointly secure a plurality of winding overhang portions of said winding arrangement wound around each pole of said rotor to said rotor core. I.e. each overhang portion may be intermediate an outer surface of a corresponding arm and said end plate. Each overhang portion being beneath the fork structure so to be closer to the rotor center axis compared to the fork structure in said installed state.

An advantage of the support arrangement of the present disclosure is that it utilizes less material while functioning in accordance with requirements. Further, the fork structure allow loads to be handled by the end plate which may reduce durability "responsibilities" of the star disc enabling the use of cheap and recyclable materials only intended to guide and isolate the winding. Accordingly, even though the star disc may radially support the winding arrangement to an extent. The end plate may support the winding arrangement to a greater extent compared to the star disc as the end plate may be dimensioned to absorb radial loads exerted between tines of each fork structure to reduce durability burden from the star disc.

The number of arms may correspond to the number of overhang portions protruding from the base portion of the rotor core. Accordingly, the number of arms may be 2-8 or more. The star disc may be located between the rotor core and the end plate at said installed state.

Each fork structure may comprise a first and a second tine being spaced apart. The tines of each fork may be identical in design. The tines may be spaced by a distance that is at least 50% of the width of the arm and/or a pole base or at least 70% of the width of the arm/pole base or at least 85% of the width of the arm/pole base. The tines may be spaced by a distance that is greater than the combined width of the tines. The tines may be positioned at opposite edges of the arm (at a distal portion of the arm).

An advantage of having two spaced tines is that the space therebetween exposes the winding overhang allowing the end plate to support the winding, thereby reducing burden on the star disc. Accordingly, upon rotation of the rotor, any force which acts on the winding overhangs to force them radially outwards towards the space between the tines will not be detrimental to the rotor as the end plate can absorb such force/prevent the winding to be dislocated.

The star disc, may at a surface which is arranged to face the core base, comprise one or more locking features (such as protruding elements or cavities) that are arranged to mate/interlock with one or more corresponding locking features provided on the rotor core base portion or pole base portion. This may simplify assembly of the star disc to the rotor as it prevents rotation of the disc in relation to the rotor core.

Further, in some aspects, the star disc may comprise one or more cooling channels (at an interior thereof). Such cooling channels may follow a path dimensioned to enable cooling medium to thermally affect a temperature of at least one of the rotor core, the overhang portions and the star disc as such. The cooling channels may be coupled to a cooling medium device arranged to pump cooling fluid (e.g. oil) therein. Accordingly, the star disc may comprise an arbitrarily positioned inlet and outlet so to allow cooling medium to be circulated therein and further outputted. The path of the cooling channels may generally conform to a star-shape or a circular shape or any other suitable path.

The end plate may comprise an inner surface having a plurality of recess patterns, each recess pattern matching a corresponding fork structure of the plurality of fork structures for enabling each recess pattern to mate with a corresponding fork structure at said installed state. Accordingly, each recess pattern may form a U-shape. The recess may be dimensioned to enable surrounding parts of the recess to handle any radial loads from the rotor.

An advantage of such a configuration is that it allow for the end plate to be better secured to the rotor and the star disc. Further, it allows the end plate to be rotationally fixed to the star disc.

Further, the end plate may comprise a plurality of protruding portions extending towards an end plate center axis, each protruding portion being dimensioned to, at said installed state, protrude radially in-between tines of each fork structure for handling/absorbing centrifugal forces of the winding. Accordingly, the protruding portions may be adjacent to the winding overhang or be spaced from the overhang by only a non-conductive mass (such as potting or a coating).

An advantage of this is that it further secures the connection of the star disc to the end plate and thereby the end plate to the rotor.

Each tine of each fork structure may comprise an upper surface that is adjoined by an interconnecting portion of said fork structure. The interconnecting portion may protrude axially outwards away from the star disc to guide the winding overhang.

Further, the interconnecting portion may comprise a corner which is mated, at said installed state with an interface portion of said end plate. In other words, the interface portion may conform to the corner, thereby tightly abutting the corner.

Advantageously, this increases the structural rigidity of the support arrangement.

Each arm of the star disc may be axially depressed relative a corresponding interconnecting portion and a base ring of said star disc.

An advantage of this is that this will ensure that a cavity will be formed intermediate the interconnecting portion and the base ring. This will enable a more convenient guiding of the winding.

Each arm may comprise an outer surface and an inner surface, wherein the inner surface is arranged to abut said pole base and said outer surface is arranged to receive a corresponding one of said plurality of winding overhang portions. Further, each arm may comprise, at said outer surface a plurality of guiding tracks, each track being shaped to correspond to a dimension of conductors of said winding arrangement. In some aspects the guiding tracks may have other dimensions, thereby not being limited to corresponding to the dimensions of the conductors of the winding arrangement.

An advantage of the guiding tracks is that it will make guiding of conductors more convenient and efficient.

The end plate and said star disc may be dimensioned to be attached to each other by a press-fit mechanism. The press-fit mechanism may be accompanied by fastening elements in order to ensure a secure attachment. The end plate may be arranged to enclose the star disc.

The star disc may be formed by a non-conductive material such as polymer or ceramic or a conductive material with a non-electrically conductive coating. In some aspects the star disc may be formed by glassfiber.

As the support arrangement of the present disclosure may be configured such that the end plate absorbs load from the winding, the star disc may be formed by a lightweight and/or durable and/or cheap material such as polymer or ceramic. Accordingly, the star disc may be configured to provide isolation and guiding mainly. Thereby, the durability responsibilities of the star disc can be removed. The end plate may be formed by a durable material such as steel or aluminium or any other suitable conductive material.

The present disclosure further relates to a rotor for an electric motor, the rotor extending axially along a center axis thereof. The rotor comprises an annular rotor core having a first and an opposite second base portion. Accordingly, the depth of the rotor may be defined by the distance between base portions (end faces) thereof. The rotor core further comprises a plurality of radially projecting poles evenly distributed around an outer circumference of said rotor core. Each pole extending between said first and second base portion. Further, the rotor comprises a winding arrangement wound around each pole, the winding arrangement forming a plurality of winding overhang portions, one at each base of each pole. The term "overhang portion" may be interchanged with "end turn portion".

Further, the rotor comprises a support arrangement comprising a star disc attached to said first base portion, the star disc having a plurality of evenly distributed radially extending arms. Each arm extending along a pole base of a corresponding pole of said plurality of poles. Further, each arm comprises, at a distal portion thereof, an axially extending fork structure arranged to support said winding arrangement. Further, the rotor comprises an end plate connected to said star disc enclosing said first base portion. The plurality of arms and said end plate may be arranged to jointly enclose said plurality of winding overhang portions.

It should be noted that the rotor may comprise a pair of support arrangement one associated to the first base portion and the other one associated to the second base portion.

In some aspects the rotor comprises a potting material arranged to electrically insulate the winding arrangement from the support arrangement. However, the rotor may comprise any other suitable insulation element such as a coating on the support arrangement.

The end plate may be dimensioned to absorb radial loads exerted between tines of each fork structure to reduce durability burden from the star disc. Thereby allowing the star disc to be more compact and utilize less material while fulfilling a function for guiding and isolation.

The present disclosure further relates to an electric motor comprising the rotor according to any aspect herein. The electric motor comprises a stator accommodating the rotor. The stator may comprise circumferentially distributed windings arranged to be powered by alternating current.

The support arrangement part of the rotor and the electric motor may comprise any one of the features of the support arrangement disclosed in the aforementioned. Therefore, to avoid undue repetition the features are not repeated in the following.

### BRIEF DESCRIPTION OF THE DRAWINGS

These and other features and advantages of the present disclosure will now be further clarified and described in more detail, with reference to the appended drawings;
- Figure 1: illustrates an exploded objective view of a support arrangement according to some aspects of the present disclosure;
- Figure 2: illustrates a front view of a rotor according to some aspects of the present disclosure;
- Figure 3: illustrates a cross-sectional view A-A of the rotor of Figure 2 according to some aspects of the present disclosure;
- Figure 4A: illustrates a front view of a rotor according to some aspects of the present disclosure;
- Figure 4B: illustrates a front cross-sectional view of a rotor according to some aspects of the present disclosure;
- Figure 5: illustrates a cross-sectional view C-C of the rotor of Figure 4A according to some aspects of the present disclosure;
- Figure 6A: illustrates an objective view of a rotor in an installed state according to some aspects of the present disclosure;
- Figure 6B: illustrates an objective view of the rotor of Figure 6A in which the end plate is removed; and
- Figure 7: schematically illustrates a vehicle comprising an electric motor comprising the rotor according to any aspect herein.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV. Further, the term "electric vehicle" may refer to a plug-in hybrid vehicle, also referred to as a PHEV. Further, the term "electric vehicle" may refer to a hybrid vehicle, also referred to as a HEV, where a hybrid vehicle refers to a vehicle utilizing multiple propulsion sources one of which is an electric drive system.

The term "winding overhang" may refer to end-turns of a winding of a rotor and/or to portions of the winding extending beyond the depth of the rotor core axially.

The term "rotor" herein may refer to an electrically excited rotor having windings being magnetized by an external electrical source. Accordingly, the windings may receive direct current to simulate a permanent magnetic field.

The term "radially" may refer to a direction perpendicularly outward from a central point or axis, specifically a central axis of a circular structure. For instance, if a line is drawn from a center of a circle to its circumference or from its circumference outwards, those lines may be considered as extending radially.

The term "axially" may refer to a direction along or parallel to an axis or central line. Specifically, parallel to or along a central line or axis of a circular structure.

The term "installed state" may refer to a rotor having the support structure assembled thereto.

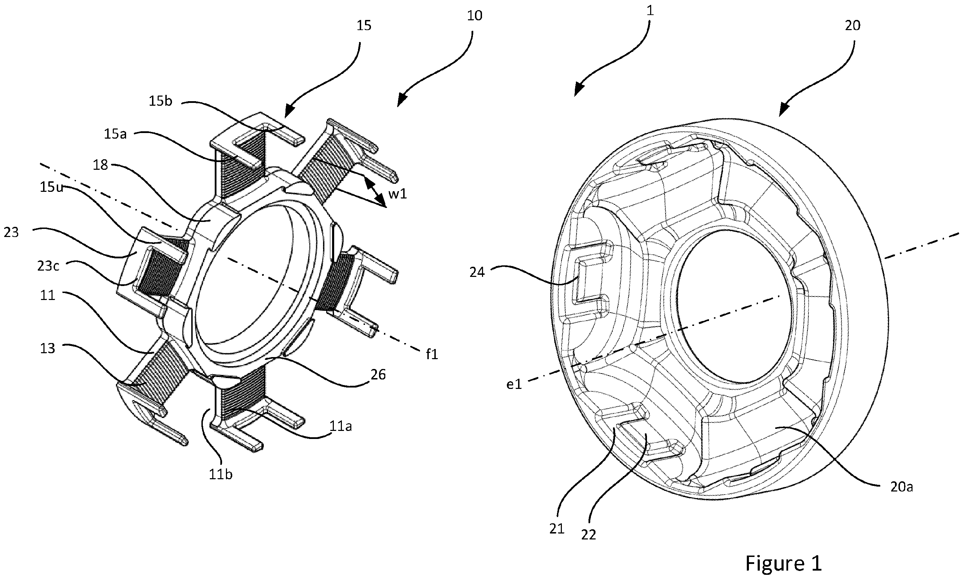

Figure 1 illustrates an objective exploded view of a support arrangement 1 for a rotor comprising an annular star disc 10 arranged to be attached to a base portion of an annular rotor core of said rotor.

Figure 1 illustrates that the star disc 10 comprises a plurality of evenly distributed radially extending arms 11. Specifically, in Figure 1, the star disc comprises six arms 11 extending radially from an annular circumference part 18 of the base ring 26 of the star disc 10. Each arm 11 comprises a width w1 and is arranged to extend along a pole base of a corresponding pole of said rotor. The term "pole base" may refer to parts of the rotor that the windings are wound around i.e. forming the magnetic poles which are created by the windings. Each pole may therefore extend radially from a circumference of the rotor core. Figure 1 further illustrates that each arm 11 comprises, at a distal portion thereof, an axially extending fork structure 15 arranged to support a winding arrangement of said rotor, the fork structure 15 comprising a plurality of tines 15a 15b. In Figure 1 the fork structure comprises two tines. Accordingly, each tine 15a, 15b is arranged to extend along the depth of the rotor perpendicular to the pole base of the rotor.

Further, the support arrangement 1 comprises an end plate 20 arranged to, at an installed state, be connected to said star disc 10. The plurality of arms 11 and the end plate 20 may be arranged to, in said installed state, jointly enclose a plurality of winding overhang portions of said winding arrangement wound around each pole of said rotor. Accordingly, each arm 11 is associated to one winding overhang portion. The end plate 20, as shown in Figure 1, is formed as a disc with a circumferential lip.

Figure 1 further illustrates that the end plate 20 comprises an inner surface 20a having a plurality of recess patterns 21. Each recess pattern 21 is dimensioned to match a corresponding fork structure 15 for enabling each recess pattern 21 to mate with a corresponding fork structure 15 at said installed state. Accordingly, in Figure 1 there is six recess patterns 21 to attach to the corresponding six fork structures 15

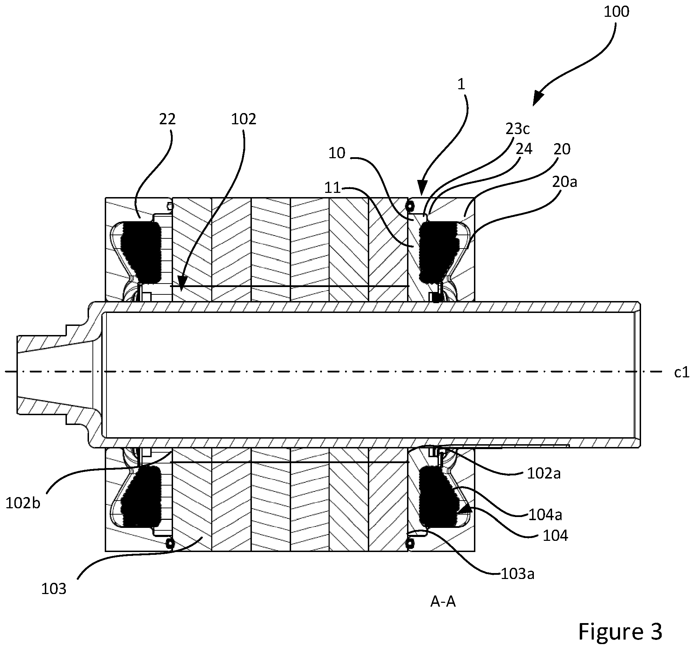

Figure 1 further illustrates that the end plate 20 comprises a plurality of protruding portions 22 extending towards an end plate center axis e1 (i.e. radially inwards), each protruding portion 22 being dimensioned to, at said installed state, protrude radially (inwards) in-between tines 15a, 15b of a corresponding fork structure 15. It should be noted that the end plate center axis e1 and the star disc center axis f1 may be coaxial when the support arrangement 1 is assembled. Accordingly, the end plate center axis e1, the star disc center axis f1 and the rotor center axis c1 (seen in Figure 3) may be coaxial/common at said installed state.

Figure 1 further illustrates that each tine 15a, 15b of each fork structure 15 may comprise an upper surface 15u, wherein each fork structure 15 comprises an interconnecting portion 23 adjoining said upper surfaces 15u thereof.

Moreover, as illustrated in Figure 1, the interconnecting portions 23 comprises a corner 23c. In Figure 1 it is illustrated that the corner 23c is in-between the tines 15a, 15b. Further, the end plate 20 may comprise an interface portion 24 arranged to, at said installed state, mate with said corner 23c.

Further, Figure 1 illustrates that each arm 11 may be axially depressed relative a corresponding interconnecting portion 23 and a base ring 26 of said star disc 10. Accordingly, a pocket or cavity like structure is formed along the center axis f1 which facilitates easier turning of the winding around outer surfaces 11a of each arm 11.

Figure 1 further illustrates that each arm 11 may comprise, at said outer surface 11a, a plurality of guiding tracks, each track being shaped to correspond to a dimension of conductors of said winding arrangement. The tracks may extend along a corresponding interconnecting portion 23.

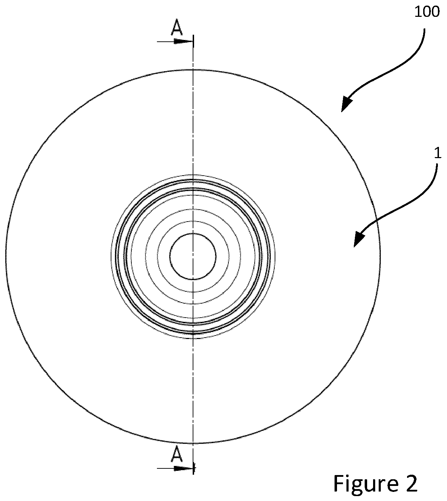

Figure 2 illustrates a front view of a rotor 100 that comprises an installed support structure 1. Figure 3 illustrates a side cross-section A-A of the rotor 100 illustrated in Figure 2. It should be noted that the tines 15a, 15b of the fork structure are not shown in Figure 3 as the cross-section is cut from a center of the rotor in Figure 2. Figure 3 illustrates that the end plate 20 and said star disc 10 are dimensioned to be attached to each other by a press-fit mechanism. However, they are not limited to be attached by press-fit. Preferably, as shown in Figure 3, the end plate 20 circumferentially encloses the star disc 10.

Figure 3 further illustrates, as previously disclosed herein, that each arm 11 is arranged to extend along a pole base 103a of a corresponding pole 103 of said rotor 100. Accordingly, Figure 3 illustrates that the axially extending fork structure 15 which, when in said installed state, extends along the axis c1, is arranged to support a winding arrangement 104 of said rotor 100. Further, Figure 3 illustrates that the end plate 20 encloses said base portion 102a of the rotor core 102. Each pole 103 extend along the depth of the core 102 such that it extends between a first and a second base portion of the core 102a, 102b. Generally, Figure 3 illustrates that two end plates 20 each cover a respective end face of the rotor 100.

Moreover, Figure 3 illustrates that the arms 11 and the end plate 20 jointly enclose a plurality of winding overhang portions 104a of said winding arrangement 104 wound around each pole 103 of said rotor 100. Specifically, it is illustrated that each end plate 20 and a corresponding arm 11 sandwich a corresponding winding overhang portion 104. Referring back to Figure 1, the surfaces 11a of each arm 11 together with the inner surface 20a of the end plate 20 jointly sandwich (at least a part of) all winding overhang portions. Referring back to Figure 3, in other words, each winding overhang portion 104a is intermediate a corresponding surface 11a and the end plate inner surface 20a.

Figure 3 further illustrates that each arm 11 comprises an outer surface and an inner surface 11a, 11b, wherein the inner surface 11b may abut said pole base 103a and said outer surface 11a is arranged to receive one of said plurality of winding overhang portions 104a. Accordingly, each winding overhang portion 104a overlaps a corresponding outer surface 11a.

The star disc 10 may be attached to the pole base 103a by fastening means (e.g. adhesive, screw, bolts, or welding) or in other aspects, the star disc 10 may be arranged to abut the pole base 103 and the end plate 20 may be fastened (by fastening means) to the rotor 100 in a manner that also secures the star disc 10 thereto. The support structure 1 can accommodate a rotor shaft as illustrates in Figure 3. During assembly, the rotor shaft may firstly be inserted in the rotor 100 then the support structure 1 may be assembled thereto.

As illustrated in Figure 3 the protruding portions 22 (which are also depicted in Figure 1) extending towards an end plate center axis (which when installed is coaxial/same as the rotor axis c1) are dimensioned to protrude radially in-between tines of each fork structure. The protruding portions 22 may be dimensioned to, at said installed state, protrude equal to or beyond the thickness of a corresponding fork structure (i.e. tines thereof) towards the center axis c1. Advantageously, this allow the protruding portions 22 to press the winding overhang portion 104 to become more compact once installed/during assembly.

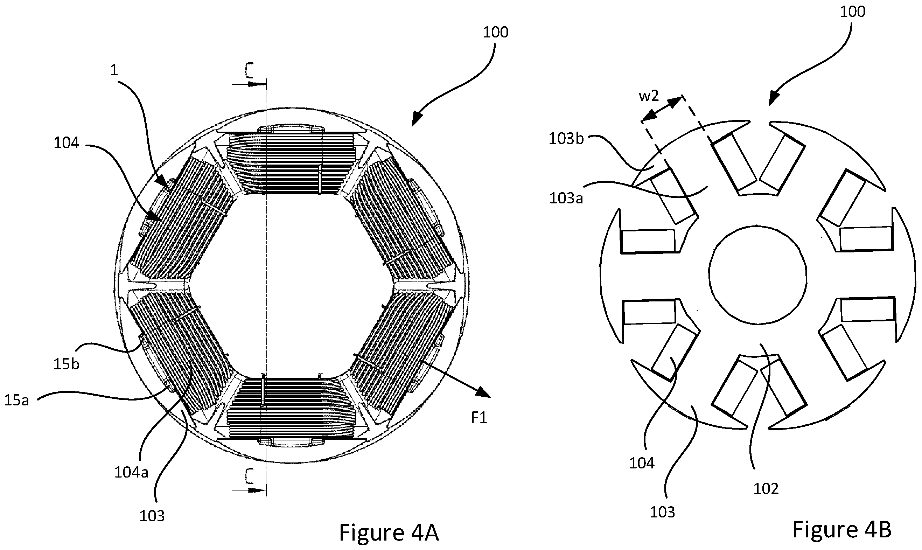

Figure 4A illustrates a rotor 100 for an electric motor from a front view, the rotor comprising the star disc 10 and a winding arrangement 104 wound around poles 103 of the rotor, wherein the winding overhang portions 104a are wound around/overlaps/abuts/are supported by arms of the star disc 10. In Figure 4A, the rotor 100 comprises six winding overhang portions 104a. The winding arrangement 104 may comprise conductors of any suitable type such as hairpin conductors. The winding arrangement 104 may have different configurations as may be apparent by a person skilled in the art. Accordingly, the winding arrangement 104 may be wound around each pole 103 in a variety of manners/patterns depending on desired characteristics of the rotor. Figure 4A illustrates that the tines 15a, 15b are spaced apart such that a center part of each overhang portion 104a, when subjected to centrifugal forces once the rotor 100 rotates, will exert a force F1 outwardly. The majority of this force can be absorbed by the end plate (not shown) thereby reducing the burden on the tines 15a, 15b. In other words, said end plate 20 is dimensioned to absorb radial loads exerted between tines 15a, 15b of each fork structure 15. However, the end plate 20 may also be dimensioned absorb radial loads exerted at portions surrounding the tines 15a, 15b.

Figure 4B illustrates a cross sectional front view of the rotor 100 of Figure 4A. Figure 4B illustrates the rotor having a core 102 and radially extending poles 103. Each pole 103 having a pole base 103a and a pole hat 103b. The pole base 103a may comprise a width w2 corresponding to the width w1 (see Figure 1) of an arm 11 of the star disc 10. Accordingly, the pole base 103a width w1 may be substantially equal (+-20%) to the width w1 of each arm 11.

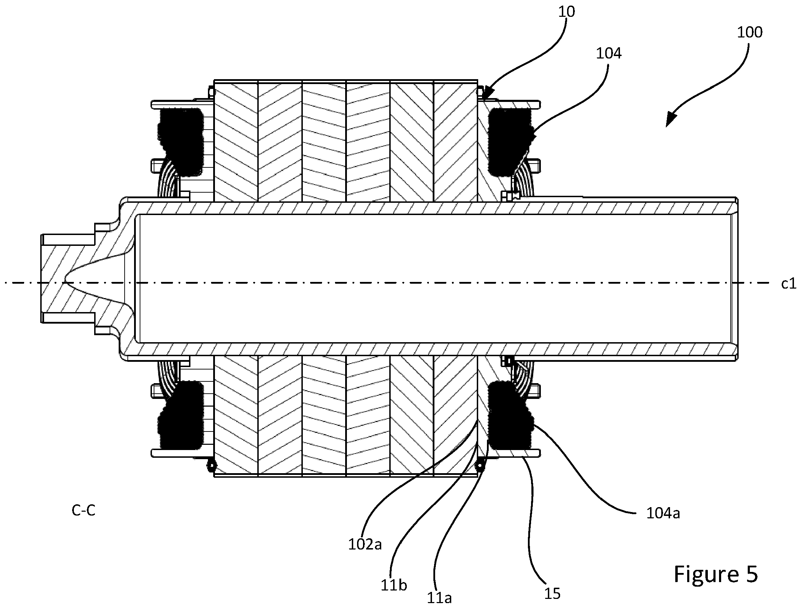

Figure 5 illustrates a side cross-sectional view C-C of the rotor 100 as illustrated in Figure 4A i.e. the rotor having the star disc 10 attached but not the end plate. Figure 5 illustrates that the inner surface 11b of the arm 11 of the star disc 10 is abutting the pole base 103a such that the outer surface 11a receives the winding overhang portion 104a. Also, Figure 5 illustrates that the surface 11a may be axially depressed along the center axis of the rotor c1 to form a pocket/cavity which facilitates the winding of the winding arrangement 104.

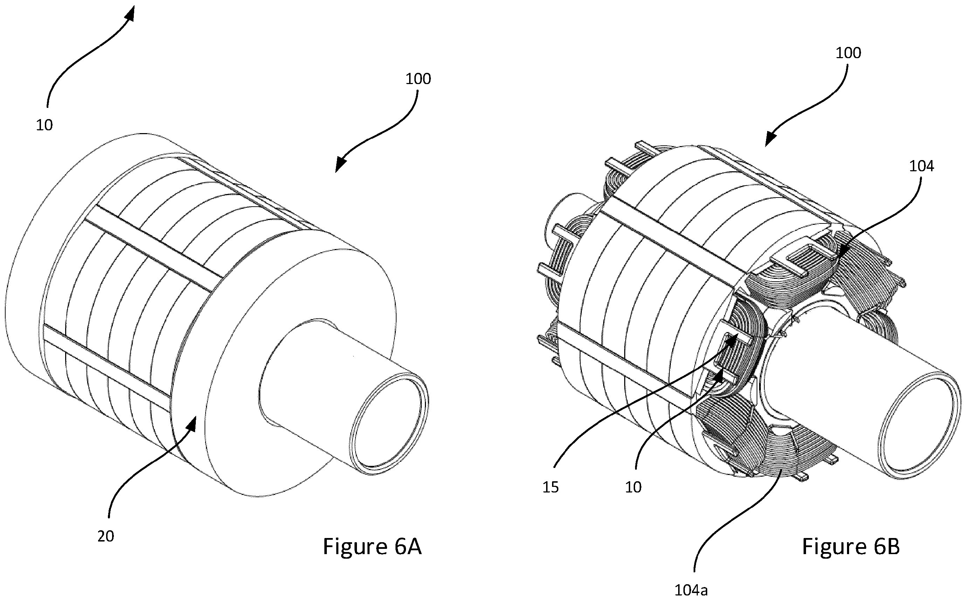

Figure 6A illustrates an objective view of a rotor 100 comprising the support arrangement 1 according to any aspect herein. As illustrated in Figure 6A, the end plate 20 (fully) circumferentially encloses the star disc (which is therefore not seen in Figure 6A). The end plate 20 may, as previously disclosed, be press-fit assembled to the star disc and further fastened by fastening means to the rotor 100.

Figure 6B illustrates an objective view of the rotor 100 of Figure 6B in which the end plate 20 is removed so to expose the star disc 10 and the winding 104. As illustrated in Figure 6B, the fork structure 15 may extending axially beyond the winding overhang 104. Further, as illustrated in Figure 6B, the winding overhang 104 may protrude beyond the width of the fork structure 15. Generally, Figures 6A-6B illustrate that in some aspects, the rotor 100 may comprise two support arrangements (a first and a second) one attached to each base of the opposing bases rotor core.

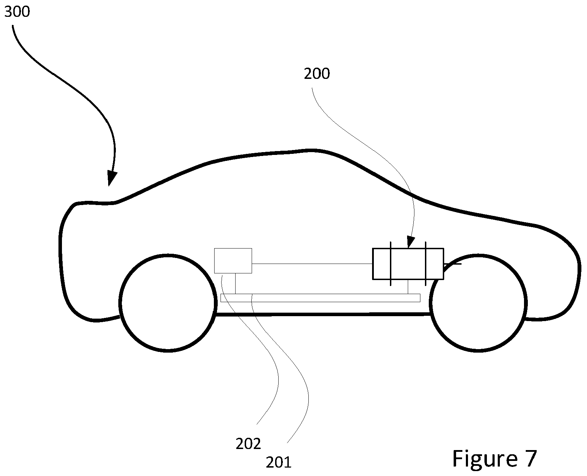

Figure 7 schematically illustrates a schematic side view of a vehicle 300 comprising an electric motor 200 (which may be referred to as an electrically excited synchronous motor) comprising the rotor 200 according to any aspect herein. Accordingly, the electric motor 200 may comprise a stator accommodating the rotor according to any aspect herein. The vehicle 300 may comprise a battery pack 201 and control circuitry 202 in order to control the electric motor 200 and any other suitable component. The vehicle 300 may further comprise an electrical current transmission system, safety system, battery management system, current management system, inverter(s) and a battery busbar interconnecting the various components. The control circuitry 202 or components thereof can comprise or include various modules, each of which is constructed, programmed, configured, or otherwise adapted to autonomously carry out a function or set of functions.

## Claims

1. A support arrangement (1) for a rotor (100) comprising:
- an annular star disc (10) arranged to be attached to a base portion (102a) of an annular rotor core (102) of said rotor (100), the star disc (10) having a plurality of evenly distributed radially extending arms (11), each arm (11) being arranged to extend along a pole base (103a) of a corresponding pole (103) of said rotor (100), wherein each arm (11) comprises, at a distal portion (13) thereof, an axially extending fork structure (15) arranged to support a winding arrangement (104) of said rotor (100), the fork structure (15) comprising a plurality of tines (15a, 15b);
- an end plate (20) arranged to, at an installed state, be connected to said star disc (10) for enclosing said base portion (102a),
wherein the plurality of arms (11) and said end plate (20) are arranged to, in said installed state, jointly enclose a plurality of winding overhang portions (104a) of said winding arrangement (104) wound around each pole (103) of said rotor (100).

2. The support arrangement (1) according to claim 1, wherein each fork structure (15) comprises a first and a second tine (15a, 15b) being spaced apart.

3. The support arrangement (1) according to any one of the claims 1 or 2, wherein the end plate (20) comprises an inner surface (20a) having a plurality of recess patterns (21), each recess pattern (21) matching a corresponding fork structure (15) for enabling each recess pattern (21) to mate with a corresponding fork structure (15) at said installed state.

4. The support arrangement (1) according to any one of the claim 1-3, wherein the end plate (20) comprises a plurality of protruding portions (22) extending towards an end plate center axis (e1), each protruding portion (22) being dimensioned to, at said installed state, protrude radially in-between tines (15a, 15b) of each fork structure (15).

5. The support arrangement (1) according to any one of the claims 1-4, wherein each tine (15a, 15b) of each fork structure (15) comprises an upper surface (15u), wherein each fork structure (15) comprises an interconnecting portion (23) adjoining said upper surfaces (15u).

6. The support arrangement (1) according to claim 5, wherein said interconnecting portion (23) comprises a corner (23c), wherein said end plate (20) comprises an interface portion (24) arranged to, at said installed state, mate with said corner (23c).

7. The support arrangement (1) according to any one of the claims 5 or 6, wherein each arm (11) is axially depressed relative a corresponding interconnecting portion (23) and a base ring (26) of said star disc (10).

8. The support arrangement (1) according to any one of the claims 1-7, wherein each arm (11) comprises an outer surface and an inner surface (11a, 11b), wherein the inner surface (11b) is arranged to abut said pole base (103a) and said outer surface (11a) is arranged to receive one of said plurality of winding overhang portions (104a).

9. The support arrangement (1) according to claim 8, wherein each arm (11) comprises, at said outer surface (11a), a plurality of guiding tracks, each track being shaped to correspond to a dimension of conductors of said winding arrangement (104).

10. The support arrangement (1) according to any one of the claims 1-8, wherein said end plate (20) and said star disc (10) are dimensioned to be attached to each other by a press-fit mechanism.

11. The support arrangement (1) according to any one of the claims 1-10, wherein said star disc (10) is formed by a non-conductive material such as polymer or ceramic or a conductive material with a non-electrically conductive coating or any combination thereof.

12. A rotor (100) for an electric motor, the rotor extending axially along a centre axis (c1) thereof, the rotor (100) comprising:
- an annular rotor core (102) having a first and an opposite second base portion (102a, 102b), the rotor core (102) comprising a plurality of radially projecting poles (103) evenly distributed around an outer circumference of said rotor core (102), each pole (103) extending between said first and second base portion (102a, 102b);
- a winding arrangement (104) wound around each pole (103), the winding arrangement (104) forming a plurality of winding overhang portions (104a), one at each base (103a) of each pole (103);
- a support arrangement (1) comprising
- a star disc (10) attached to said first base portion (102a), the star disc (10) having a plurality of evenly distributed radially extending arms (11), each arm (11) extending along a pole base (103a) of a corresponding pole of said plurality of poles (103), wherein each arm (11) comprises, at a distal portion (13) thereof, an axially extending fork structure (15) arranged to radially support said winding arrangement (104);
- an end plate (20) connected to said star disc enclosing said first base portion (102a);
wherein said plurality of arms (11) and said end plate (20) are arranged to jointly enclose said plurality of winding overhang portions (104a).

13. The rotor (100) according to claim 12, wherein the rotor (100) comprises a potting material arranged to electrically insulate the winding arrangement (104) from the support arrangement (1).

14. The rotor (100) according to any one of the claims 12 or 13, wherein said end plate (20) is dimensioned to absorb radial loads exerted between tines (15a, 15b) of each fork structure (15).

15. An electric motor (200) comprising the rotor (100) according to any one of the claims 12-14.
